## Europäisches Patentamt
## European Patent Office
## Office européen des brevets

(19)

(11) Numéro de publication: **0 041 647**

**A1**

(12)

# DEMANDE DE BREVET EUROPEEN

(21) Numéro de dépôt: **81104053.4**

(51) Int. Cl.³: **G 02 F 1/135**

(22) Date de dépôt: **27.05.81**

(30) Priorité: **11.06.80 CH 4477/80**

(43) Date de publication de la demande:
**16.12.81 Bulletin 81/50**

(84) Etats contractants désignés:
**AT BE CH DE FR GB IT LI LU NL SE**

(71) Demandeur: **CABLES CORTAILLOD S.A.**

**CH-2016 Cortaillod(CH)**

(72) Inventeur: **Kerllenevich, Betty**
**294, Sarmiento**
**Bahia Blanca(AR)**

(72) Inventeur: **Coche, André**
**1, rue d'Offendorf**
**F-67000 Strasbourg(FR)**

(72) Inventeur: **Pellaux, Jean-Paul**
**Petits Chênes 2**
**CH-2000 Neuchatel(CH)**

(74) Mandataire: **Nithardt, Roland**
**CABINET ROLAND NITHARDT Rue Edouard Verdan 15**
**CH-1400 Yverdon(CH)**

(54) **Convertisseur infrarouge.**

(57) La présente invention concerne un convertisseur infra-rouge à cristaux liquides comportant une première couche 1 d'oxyde d'indium ou d'oxyde d'étain, une seconde couche de silicium monocristallin 2, ces deux couches constituant une hétérojonction à l'interface de laquelle règne un fort champ électrique permettant la séparation des photo-porteurs créés par un éclairement Eı par rayonnement infrarouge. Une couche de cristaux liquides 3, constituée par un mélange de cristaux cholestériques et nématiques, est prise entre la couche de silicium 2 et la face conductrice d'une plaque transparente 5. Une tension alternative V est appliqueé entre la couche de cristaux liquides 4 et la couche d'oxyde 1.

FIG. I

EP 0 041 647 A1

- 1 -

## Convertisseur infrarouge

La présente invention concerne un convertisseur infrarouge.

On connaît déjà des dispositifs de visualisation à cristaux liquides, utilisant soit des effets de champ sur des cristaux nématiques, soit la transformation cholestérique-nématique sous l'action d'un champ électrique. Ces dispositifs connus comportent habituellement une couche d'un élément photo-conducteur tel que le sélénium ou le sulfure de cadmium (CdS), une couche de cristaux liquides, ces deux couches étant juxtaposées et prises en sandwich entre deux plaques transparentes rendues conductrices sur leurs faces intérieures. L'éclairement de l'élément photo-conducteur, par exemple au moyen d'un rayonnement appelé lumière d'écriture, crée des porteurs de charges. Toutefois, le champ électrique régnant dans la couche étant relativement faible, il arrive aux porteurs de charges de se recombiner, l'effet photo-conducteur étant alors réduit par suite de la perte de conducteurs, ce qui entraîne une diminution de la sensibilité du système.

En outre, pour éviter que la lumière ne produise un

- 2 -

effet similaire à celui de la lumière d'écriture qui viendrait interférer avec ce dernier, il est indispensable, dans les dispositifs connus, de prévoir une couche d'arrêt interposée entre l'élément photo-conducteur et la couche de cristaux liquides.

La présente invention se propose d'éliminer ces différents inconvénients en réalisant un convertisseur infrarouge à cristaux liquides de grande sensibilité, en particulier pour l'infrarouge proche, et dans lequel la lumière utilisée pour la lecture ne risque pas de créer des porteurs dans la couche photo-sensible, bien qu'aucune couche d'arrêt ne soit prévue comme c'est le cas pour les dispositifs conventionnels.

Dans ce but, le convertisseur infrarouge selon l'invention est caractérisé en ce que l'élément ayant des propriétés photo-électriques comprend deux couches superposées de matériaux semi-conducteurs, constituant une hétérojonction telle qu'à l'interface règne un champ électrique intense, permettant la séparation des photo-porteurs créés à la suite d'un éclairement par un rayonnement infrarouge.

La présente invention sera mieux comprise en référence à la description d'un exemple de réalisation et du dessin annexé, dans lequel :

La figure 1 est une représentation schématique du convertisseur infrarouge selon l'invention,

- 3 -

La figure 2 représente le schéma du circuit équivalent
au dispositif de la fig. 1,

La figure 3 représente la courbe de sensibilité pho-
to-électrique du silicium utilisé dans le dispositif
de la fig. 1.

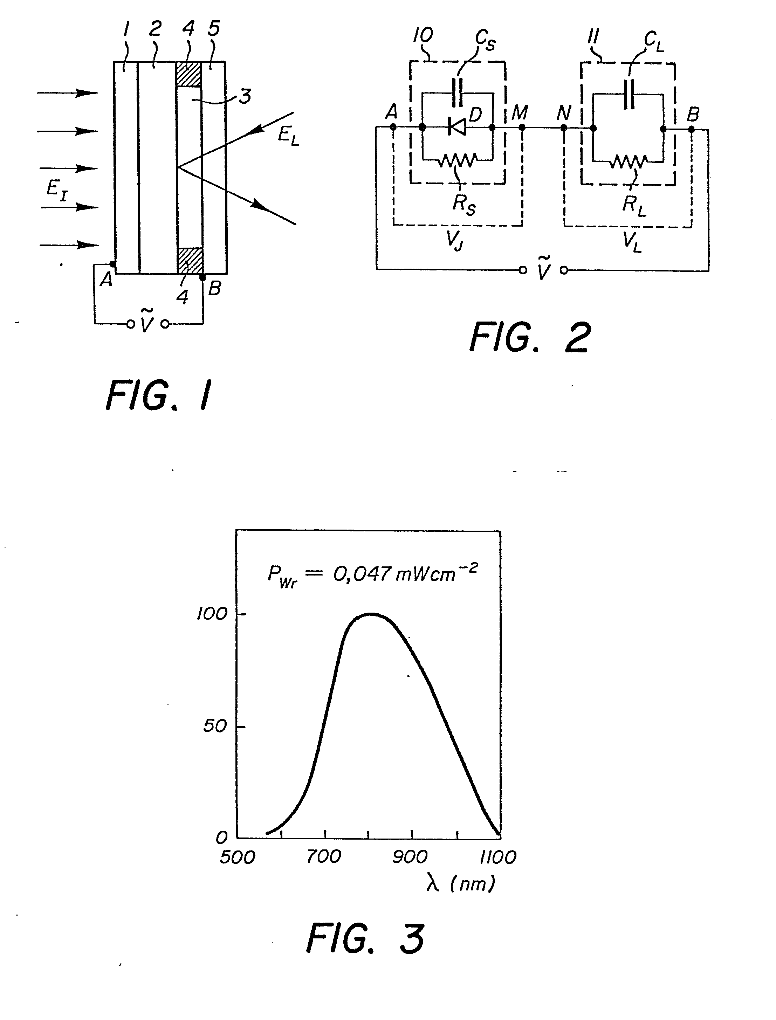

En référence à la fig. 1, le convertisseur comporte
un élément photo-sensible composé d'une première couche 1 et d'une seconde couche 2, ces deux couches constituant une hétérojonction telle qu'à l'interface règne un champ électrique intense, permettant la séparation des photo-porteurs créés par suite d'un éclairement au moyen de la lumière d'inscription $E_I$ qui, dans
l'exemple décrit, est un rayonnement infrarouge. La
couche 1 est constituée par de l'oxyde d'indium ($In_2 O_3$)
ou de l'oxyde d'étain ($Sn O_2$), qui présentent tous deux
l'avantage de pouvoir être pulvérisés à relativement
basse température (400 à 500° C).

La couche 3 se compose d'un mélange de cristaux liquides cholestériques et nématiques, ce mélange ayant un
comportement assimilable à celui d'un cristal cholestérique pur pour ce qui est du phénomène de la transformation cholestérique-nématique, dont on se sert pour
visualiser le rayonnement infrarouge.

Une cage isolante 4, par exemple constituée par une bague circulaire ou des longerons disposés parallèlement,
détermine l'épaisseur de la couche de cristaux liquides.
Le support 5 est une plaque transparente métallisée
sur sa face intérieure, c'est-à-dire celle qui se trouve en contact avec les cristaux liquides. Il peut être

- 4 -

constitué par une plaque de quartz ou de verre rendue conductrice sur sa face intérieure, par exemple par métallisation ou par dépôt d'un oxyde d'étain ou d'indium.

Une tension alternative V est appliquée entre les points A et B, c'est-à-dire entre la couche d'oxyde qui constitue la couche extérieure 1 de l'élément photo-sensible, et la face conductrice intérieure de la plaque transparente 5 en contact avec la couche de cristal liquide 3.

La fig. 2 représente le schéma du circuit équivalent au dispositif de la fig. 1. L'hétérojonction est représentée schématiquement par le bloc 10 délimité par des traits interrompus, et la couche de cristaux liquides est représentée schématiquement par le bloc 11 également délimité par un carré en traits interrompus. Le schéma équivalent à la jonction est représenté par une diode D connectée en parallèle avec un condensateur $C_S$ et une résistance $R_S$. Le schéma équivalent à la couche de cristaux liquides est représenté par un condensateur $C_L$ et une résistance $R_L$ connectés en parallèle. La tension alternative V est égale à la somme des tensions $V_J$ et $V_L$, respectivement entre les points A et M d'une part, et N et B d'autre part, définissant les bornes respectives des blocs 10 et 11 sur le schéma équivalent. L'impédance $Z_S$, équivalente de l'élément photo-sensible constitué par les couches 1 et 2 étant relativement élevée, la tension $V_J$ est élevée en l'absence de tout éclairement $E_L$.

- 5 -

Lorsqu'on éclaire le dispositif de la fig. 1 par une lumière d'écriture $E_L$, il se forme, dans la couche de silicium 2, des porteurs de charges qui sont entraînés par le fort champ électrique régnant au niveau de la jonction. Cet effet a pour conséquence de diminuer l'impédance $Z_S$ du système et de diminuer la tension $V_J$ entre les points A et M du circuit équivalent. Comme la tension V reste constante, il en résulte une augmentation de la tension $V_L$ entre les bornes N et M de la couche de cristaux liquides. Cette augmentation de tension peut, dans des conditions expérimentées, devenir suffisante pour déclencher un phénomène électro-optique dans le cristal liquide tel que la transformation cholestérique-nématique. A l'état cholestérique, les cristaux liquides sont diffusants, tandis qu'à l'état nématique, les cristaux liquides sont transparents.

Si on éclaire le dispositif de la fig. 1 du côté de la plaque transparente 5 par une lumière de lecture $E_L$, le faisceau réfléchi, projeté sur un écran, fournira une image des endroits éclairés par un rayonnement infrarouge. La lumière d'écriture peut par exemple être appliquée à travers un masque. Dans ce cas, on observera des plages transparentes correspondant à des cristaux liquides nématiques aux endroits non masqués et des plages obscures correspondant à des cristaux liquides cholestériques aux endroits masqués.

La fig. 3 représente la courbe de sensibilité du silicium utilisé pour la réalisation du dispositif représenté. On constate que le maximum de sensibilité correspond à une longueur d'onde de l'ordre de 800 nm, c'est-à-dire une longueur d'onde située dans l'infrarouge proche. Ceci a pour avantage de permettre l'utilisation d'une lumière de lecture $E_L$ ayant une longueur d'onde de l'ordre de 500 à 550 nm, c'est-à-dire une lumière visible jaune, sans que l'on ne soit obligé d'interposer une couche d'arrêt entre la couche de cristaux liquides 3 et la couche de silicium 2, pour éviter une interférence entre les effets provoqués par la lumière d'inscription $E_I$ et la lumière de lecture $E_L$. On a utilisé du silicium monocristallin, mais il est bien entendu que tout autre matériau semiconducteur, dont la courbe de sensibilité a son maximun situé dans l'infrarouge proche ou lointain, serait également utilisable. Toutefois, la réalisation de couches de la plupart des matériaux ayant cette caractéristique est difficile.

Le dispositif est extrêmement sensible, il est très facile de l'utiliser avec une puissance de la lumière d'écriture inférieure à 10 $\mu$W.cm$^{-2}$ pour des tensions de quelques dizaines de volts, de fréquences de 5 à 20 KHz.

Le dispositif expérimental, utilisé pour faire les différentes mesures, comporte un monocristal de silicium d'environ 50 mm de diamètre, une épaisseur de l'ordre de 200 $\mu$m. La couche d'oxyde a une épaisseur de l'ordre de 100 à 200 nm. La couche de cristaux liquides a une épaisseur de l'ordre de 10 $\mu$m. La surface utile est en fait limitée par la surface de silicium de haute résistivité dont on peut disposer.

- 7 -

Le dispositif selon l'invention est particulièrement utile du fait qu'il est efficace dans l'infrarouge proche, la sensibilité du silicium pour une lumière d'écriture de l'ordre de 1'000 nm étant environ 40 % de son maximum voisin de 800 nm.

- 8 -

Revendications

1. Convertisseur infrarouge, caractérisé en ce qu'il comporte au moins un premier élément constitué par un matériau ayant des propriétés photo-électriques, un second élément juxtaposé constitué par des cristaux liquides, et un dispositif pour appliquer une tension alternative entre ledit premier et ledit second éléments, l'élément ayant des propriétés photo-électriques comprenant deux couches superposées de matériaux semi-conducteurs, constituant une hétérojonction telle qu'à l'interface règne un champ électrique intense, permettant la séparation des photoporteurs créés à la suite d'un éclairement par un rayonnement infrarouge.

2. Convertisseur infrarouge selon la revendication 1, caractérisé en ce que le matériau constituant la couche extérieure semi-conductrice est choisi parmi les composés suivants : Oxyde d'indium ($In_2 O_3$) et oxyde d'étain ($SnO_2$).

3. Convertisseur infrarouge selon la revendication 1, caractérisé en ce que la couche semi-conductrice intérieure est constituée par un matériau ayant une courbe de sensibilité, dont le maximum est situé dans la partie du spectre correspondant à l'infrarouge.

4. Convertisseur infrarouge selon la revendication 3, caractérisé en ce que la couche semi-conductrice intérieure est constituée par du silicium monocristallin de haute résistivité.

- 9 -

5. Convertisseur infrarouge selon les revendications 1 et 2, caractérisé en ce qu'il comporte une plaque transparente conductrice sur sa face intérieure, cette face étant en contact avec la couche de cristaux liquides, et en ce que la tension alternative est appliquée entre cette face conductrice et la couche semi-conductrice extérieure.

6. Convertisseur infrarouge selon la revendication 5, caractérisé en ce que la plaque transparente est métallisée sur sa face intérieure.

7. Convertisseur infrarouge selon la revendication 5, caractérisé en ce que la face intérieure de la plaque transparente a été rendue conductrice par application d'un film d'oxyde d'indium ou d'oxyde d'étain.

$\dfrac{1}{1}$

0041647

FIG. 1

FIG. 2

FIG. 3

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | IBM TECHNICAL DISCLOSURE BULLETIN, vol. 18, no. 6, novembre 1975, New York, US G.J. SPROKEL: "Photodiode controlled storage cells", page 1986 <br><br> * En entier * <br><br> -- | 1,4 | G 02 F 1/135 |
| | APPLIED PHYSICS LETTERS, vol. 34, no. 7, avril 1979 New York, US L. SAMUELSON et al.: "Fast photoconductor coupled liquid-crystal light valve", pages 450-452 <br><br> * Page 450, colonne de gauche, avant-dernier alinéa; page 451, colonne de droite, avant-dernier alinéa; figure 1 * <br><br> -- | 1,4, 5,7 | |
| | US - A - 4 032 954 (J. GRINBERG et al.) <br><br> * Revendication 1; figures 1-3 * <br><br> -- | 1,4,5, 7 | |
| | FR - A - 2 209 121 (HUGHES AIRCRAFT) <br><br> * Page 1, lignes 1-8; revendications 1,2 et 9; figure 1 * <br><br> -- | 1,5,7 | |
| | JAPANESE JOURNAL OF APPLIED PHYSICS, vol. 16, no. 12, décembre 1977 Tokyo, JP M. FUJINAKA et al.: "Highly photosensitive diodes ($SnO_2$ and $In_2O_3$-Si) and their applications", pages 2211-2215 <br><br> ./. | 1-4 | |

**DOMAINES TECHNIQUES RECHERCHES (Int. Cl.³)**

H 01 L 31/10
            31/14
G 02 F   1/135

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&  membre de la même famille, document correspondant

Le présent rapport de recherche a été établi pour toutes les revendications

| Lieu de la recherche | Date d'achèvement de la recherche | Examinateur |
|---|---|---|
| La Haye | 03-09-1981 | BORMS |

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | * Pages 2212-2213, paragraphe 3.1; figures 1 et 5 * | | |
| | -- | | |
| | US - A - 3 707 322 (J.J. WISSOCKI et al.) | 1,5-7 | |
| | * Colonne 5, lignes 28-41; revendication 1* | | |
| | ---- | | |
| | | | **DOMAINES TECHNIQUES RECHERCHES (Int. Cl. ³)** |

OEB Form 1503.2    06.78